# EUROPEAN PATENT APPLICATION

(11) **EP 4 220 450 A1**
(43) Date of publication of application: **02.08.2023**
(21) Application number: 22154418.2
(22) Date of filing: 01.02.2022
(51) Int. Cl.: G06F 21/10, G06F 21/34, G06F 21/62, H04L 9/32, H04L 9/00, H04L 9/40

(54) **CONTROLLED PROVISION OF ELECTRONIC DATA FOR MACHINE-LEARNING**

(71) Applicant: Charité - Universitätsmedizin Berlin, 10117 Berlin (DE); Universitätsklinikum Essen, 45147 Essen (DE)
(72) Inventor: Tobias, Penzkofer, 10439 Berlin (DE); Jens, Kleesiek, 45470 Mülheim (DE)
(74) Representative: Best, Bastian

(57) **Abstract**

The present invention concerns a computer-implemented method for the controlled provision of electronic data for machine learning, in particular machine-learning training data, between research and development entities is provided, wherein the method may comprise the following steps that may be performed by a data sharing platform computer system: receiving, from a data recipient computer system, user input comprising one or more selection criteria for an electronic data set, wherein the one or more selection criteria may include a selection of at least one data provider computer system; causing, using application programming interfaces (APIs) that may be provided to the data recipient and may be provided to the at least one data provider, the selected at least one data provider to provide the electronic data set to the data recipient, preferably over a secured connection between the data recipient and the at least one data provider; and enforcing, using at least part of the APIs of the data provider and/or data recipient, at least one usage constraint that may be defined by the at least one data provider on the electronic data set.

## Description

### TECHNICAL FIELD

The present invention generally concerns the field of electronic data exchange across networked computer systems, and in particular the controlled provision of electronic data for machine-learning between research and development entities.

### BACKGROUND

In the area of music and video streaming services, it is common to provide data with a limited expiry date in order to protect copyrights or other commercial interests, for example. So far, such solutions do not exist for sensitive data, e. g. medical patient data. This poses great challenges to users in research projects but also in commercial applications, since especially due to the increasing importance of artificial intelligence (AI) methods and machine learning, it is necessary to have data available, for example, for training and evaluation of the methods.

On the other hand, there are economic interests and legal framework conditions (data protection, privacy, confidentiality), which restrict the free provision of data. For this reason, projects often fail due to a lack of data exchange between institutions and companies. In general, there is an interest of the owners of data in technically controlling the type of use, the distribution and the whereabouts of the data, if they provide the data to third parties.

The inability to exchange data therefore affects many projects, in particular research or industry projects in the medical field. This hinders progress, thus, resembling a true pain point. Removing the barriers for data exchange in the administrative, regulatory and technological dimension, e. g. between universities, hospitals, research institutions and industrial partners, would thus be desirable.

The unmet need is a system which allows both, the effective sharing of data, in particular for AI applications, between two or more parties but also effective means of controlling the access to these data. If this unmet need is solved, it would allow for more progress in research and development, while at the same time preserving the interests of the data providers and compliance with data protection regulations, especially the need for traceability and the enforcement of rights of the data subjects. The requirement of protection of sensitive data is particularly important in the medical field where patient data are concerned.

In the following, some approaches available on the market are presented, which, however, do not fulfill the above-mentioned requirements entirely as would be desired.

ClinFlows (www.clinflows.com): This company provides solutions for sharing clinical data and medical images. They provide an online platform and transfer service, targeting a human-centered workflow optimization, e. g. a central reading process for a clinical trial.

Visus JiveX Healthcare Connect (www.visus.com/connect.html): This company's primary product is a Picture Archiving and Communication System (PACS). With their exchange they target the cross-sector communication, aiming at reducing time and quality losses in patient care.

4MedBox (www.4medbox.nl): This company uses blockchain technologies to share health data between patients and various target groups.

DataShield (www.datashield.org) and Kaapana (www.kaapana.ai): These two open-source research projects have the concept that the data resides at the participating sites. Instead, algorithms are sent to the participating locations. The analysis results are pooled.

As can be seen by the various, partially conceptual, approaches, there is no gold-standard so far for data sharing, in particular not in the field of medical data exchange.

It is therefore a problem underlying the invention to provide a method for the provision of machine-learning training data that considers the need of controlling the usage of sensitive data.

### SUMMARY

The problem is solved by the subject-matter defined in the independent claims.

According to a first aspect of the present invention, a computer-implemented method for the controlled provision of electronic data for machine-learning, in particular machine-learning training data, in particular between research and development entities is provided. The method may be performed by a data sharing platform computer system. The method may comprise receiving, from a data recipient computer system, user input comprising one or more selection criteria for an electronic data set, in particular for a machine-learning training data set. The one or more selection criteria may include a selection of at least one data provider computer system. The method may further comprise causing, using application programming interfaces (APIs) that may be provided to the data recipient and may be provided to the at least one data provider, the selected at least one data provider to provide the electronic data set, in particular the machine-learning training data set, to the data recipient, preferably over a secured connection between the data recipient and the at least one data provider, which may be for example a point-to-point or a peer-to-peer connection. The method may further comprise enforcing, using at least part of the APIs of the data provider and/or data recipient, at least one usage constraint that may be defined by the at least one data provider on the electronic data set, in particular on the machine-learning training data set.

According to a second aspect of the present invention, a computer-implemented method for the controlled provision of electronic data for machine-learning, in particular machine-learning training data, in particular between research and development entities is provided, which method may be performed by a data provider computer system. The method may comprise providing, using application programming interfaces (APIs) of a data provider computer system, an electronic data set, in particular a machine-learning training data set, to the data recipient computer system preferably over a secured connection with the data recipient. The providing may be performed after a data sharing platform computer system has received user input comprising one or more selection criteria for an electronic data set, in particular for a machine-learning training data set, from a data recipient. The one or more selection criteria may include a selection of at least one data provider computer system. The method may further comprise defining, by the data provider, at least one usage constraint on the electronic data set, in particular on the machine-learning training data set. The at least one usage constraint may be enforced, preferably by the data sharing platform, using APIs of the data provider and of the data recipient.

According to a third aspect of the present invention, a computer-implemented method for the controlled provision of electronic data for machine-learning, in particular machine-learning training data, in particular between research and development entities is provided, which method may be performed by a data recipient computer system. The method may comprise determining, by the data recipient computer system on the basis of a user input, one or more selection criteria for an electronic data set, in particular for a machine-learning training data set. The one or more selection criteria may include a selection of at least one data provider computer system. The one or more selection criteria may be provided to a data sharing platform. The method may further comprise receiving, using application programming interfaces (APIs) of the data recipient computer system, the electronic data set, in particular the machine-learning training data set, from a data provider computer system over a secured connection with the data provider. The data sharing platform may enforce, using APIs of the data recipient and of the data provider, at least one usage constraint defined by the at least one data provider on the electronic data set, in particular on the machine-learning training data set.

The following description and disclosure is presented primarily from the perspective of the data sharing platform, i.e., the first aspect of the present invention, but is self-evidently applicable mutatis mutandis to the second and third aspects of the present invention.

The controlled provision of electronic data in the sense of the present invention may be understood as a data exchange between the data provider and the data recipient, wherein the data provider is directly or indirectly the owner and/or legitimate administrator of the data, and wherein the data provider in its role as an owner and/or legitimate administrator is enabled to keep control over the usage of the data although data exchange is performed. It is particularly preferred that the data provider and/or the data recipient is a Research and Development (R&D) entity. To give an example for a situation in which the data provider is the legitimate administrator of the data, one could imagine the situation in which a hospital has medical patient data, in particular generated by medical therapies or diagnostics, and uses a server system to structure and maintain the data. Particularly medical patient data is a very sensitive type of data which is also concerned by data protection laws and other regulations. However, medical patient data can be seen as a very valuable basis for training machine-learning models.

Electronic data can include any form of data for which a data recipient could have a purpose or to which a data recipient is keen. Thus, the method of the present invention can be applied to any form of electronic data. A particularly relevant type of electronic data according to the present invention is machine-learning data. Machine-learning data may, in general, be any data which is suitable for training and/or testing and/or benchmarking and/or validating a machine learning model. In that sense, the data may be of any type, including for example image data, text data, video data or any type of information carrying data formats. Examples may be training data, research data, benchmarking data, time-series data, tabular data, radiology images, and/or sensor data.

In the following disclosure, the term electronic data and the term machine-learning data are both used, but however, it should be understood that the term machine-learning data may be replaced by the term electronic data at any time, and vice versa.

A data provider computer system may be a personal computer, a server system or a cloud system, in particular comprising a decentralized database, configured for storing the machine-learning training data. A data recipient computer system may be a personal computer, a server system or a cloud system which desires usage of the machine-learning training data, in particular for training and/or benchmarking a machine-learning model. Of course, it may be provided that one data recipient computer system interacts with a plurality of data provider computer systems and vice versa. The data provider computer system and the data recipient computer system may comprise application programming interfaces (APIs) through which they may establish a communication channel to each other.

A data sharing platform computer system may be configured to be a server system, a cloud service or a web application. Preferably, the data sharing platform computer system is configured to communicate with the data provider computer system and data recipient computer system using the respective APIs. Further, the data sharing platform computer system may also comprise one or more API(s) for the communication. It would be particularly advantageous if the data sharing platform computer system includes a first and a second user interface, wherein the first user interface is provided to a data provider to register data which is intended for sharing and/or to define usage constraints and/or to trigger immediate usage constraints, and wherein the second user interface is provided to a data recipient for choosing desired data. In that sense, the data sharing platform computer system may be understood as an external management platform, which does not store machine-learning training data itself. However, it may contain information that is associated with the machine-learning training data and can be mapped to it, for example using a hash table.

With respect to the step of receiving, from a data recipient computer system, user input comprising one or more selection criteria for a machine-learning training data set, wherein the one or more selection criteria may include a selection of at least one data provider computer system, this user input may particularly be made by means of a user interface which is accessible by a user who desires usage of machine-learning training data, wherein the user communicates through the APIs of the data recipient computer system, and wherein the user interface is provided by the data sharing platform computer system. In order to provide easy access to the user interface and to easily facilitate receiving user input, the world wide web may be used for communication.

The selection criteria for the machine-learning training data set may, apart from the selection of one or more specific data providers, comprise further selection criteria such as a minimum requirement of user ratings, a minimum requirement for availability of certain metadata, a minimum requirement for the age of the machine-learning training data set, a requirement for the origin of the machine-learning training data set, a requirement on the price to be paid for the use of the data, a requirement for the terms of use of the machine-learning training data set, particularly with respect to the duration and extent of use. In that sense, the selection criteria may be implemented as a filter list which may be displayed through the APIs. Causing the data provider to provide the machine-learning training data to the data recipient is carried out by the data sharing platform by triggering the provision of the data and/or by confirming that the provision of the data can be allowed due to requirements which are met. Thereby, the data sharing platform may communicate with the data provider via its APIs.

It is particularly preferred that the secured connection is a dedicated connection. A dedicated connection between the data recipient and the at least one data provider may be understood as a connection without involving the data sharing platform. Thus, a connection over a network, in particular over the internet, between a data provider and a data recipient may be a dedicated connection in the sense of the present invention.

One important advantage of using a dedicated, e.g., peer-to-peer, connection between the data recipient and the data provider, especially with regard to the protection of sensitive data, is that the provided data does not have to be routed via a central server but is exchanged directly. This minimizes the risk of data being tapped, for example by a man-in-the-middle attack and is particularly beneficial for the data provider to keep control over the provided data. Further, generally compared to classic client-server architectures, peer-to-peer networks offer better scalability, lower IT operating costs, higher fault tolerance, higher connection stability and robustness. Further, the points of entry for attacks is reduced.

The peer-to-peer connection may be part of a centralized peer-to-peer system, wherein the data sharing platform acts as the central server for managing the network. Alternatively, a hierarchical peer-to-peer connection system may be provided, wherein different data provider computer systems may be in the role of the central super node. Advantageously, a distributed hash table (DHT) may be provided with the peer-to-peer connection system in order to facilitate processing requests in a systematic and efficient manner, for example filtering requests including the one or more selection criteria of the data recipient as described above.

Using a point-to-point connection between the data recipient and the data provider is a particularly easy way of implementing the exchange of electronic data having a low latency and providing a high bandwidth. Further, this type of network is easy to handle and maintain.

The step of enforcing at least one usage constraint that may be defined by the at least one data provider on the machine-learning training data set is of particular importance in ensuring that the data provider retains control over the data intended for use by a data recipient. Sensitive data, such as medical patient data, is thus protected. In particular, the duration of use, frequency of use and/or purpose of use can be advantageously limited. Furthermore, it can be provided that the data provider can withdraw the permission to use the data, preferably at any time. For the enforcement of usage constraints, a preferably permanent connection between the data recipient and the data sharing platform, and/or between the data recipient and the data provider, and/or between the data provider and the data sharing platform may be provided. For example, for a higher level of security, it can be required as a condition for the use of the data that there is a respective connection.

Further, it may be provided that the machine-learning training data set is performed in an encrypted manner, wherein encryption management is performed by the data sharing platform communicating with the APIs, preferably using Diffie-Hellmann key exchange (DH-key exchange) and/or Elliptic Curve Digital Signature Algorithm (ECDSA) and/or Rivest-Shamir-Adleman encryption (RSA). For example, with respect to implementation of the encryption, a multi-part key with distributed sub-keys may be provided.

The Diffie-Hellmann key exchange (DH-key exchange) is an efficient algorithm for solving the problem of key agreement and exchange between two parties who intend to communicate encrypted. It enables the two parties who want to communicate with each other to agree on a symmetric key that can be used for encryption and decryption. By using the DH key exchange, the sender and receiver do not need any prior knowledge of each other for agreeing on a key. Further, once the key is exchanged, the communication of data can be done through an insecure channel.

Since the problem of the discrete logarithm in elliptic curves is significantly more difficult than calculating the discrete logarithm in finite solids or factoring integers, cryptosystems based on elliptic curves like the Elliptic Curve Digital Signature Algorithm (ECDSA) can operate securely with considerably shorter keys than conventional asymmetric crypto methods, such as the Shamir-Adleman encryption (RSA) cryptosystem or the Diffie-Hellman key exchange (DH-key exchange).

Additionally or alternatively it may be provided that the machine-learning training data set is secured by means of multi-factor authentication (MFA), which may be a two-factor authentication (2FA), wherein the multi-factor authentication (MFA) preferably comprises asymmetric encryption, wherein preferably at least one factor of the respective multi-factor authentication (MFA) or two-factor authentication (2FA)
- is provided on a MFA-hardware device or may be provided to be a MFA-hardware device, the MFA-hardware device being configured to at least partially decrypt encrypted machine-learning training data, and/or
- is provided by using a blockchain generated key, the blockchain generated key being configured to at least partially decrypt encrypted machine-learning training data.

By using multi-factor authentication (MFA) the security of the method is further enhanced. In particular, MFA can ensure that the data recipient who is to be authorized for use the machine-learning data set is really the genuine data recipient. In other words, the correct identity of the data recipient is approved.

Advantageously, one factor of the MFA may be provided on a MFA-hardware device which may be provided by an operator of the data sharing platform. In particular, the MFA-hardware device may be a biometric authenticator capable to receive a biometric input of a user who acts as data recipient. Alternatively, the MFA-hardware device may have a specific key stored which is associated with the data recipient.

Alternatively, the MFA-hardware device may be a smart device of the data recipient, configured to generate a randomly generated and frequently changing code to use for authentication. This may be realized through a third-party authenticator (TPA) app which is run on the smart device.

The at least one factor provided by the MFA hardware device may be a blockchain generated key which confers several advantages.

The purpose of using a blockchain generated key is to confirm the user's identity and ensure trust between users when exchanging messages. Users must register with their ID and public key - this information is stored in the blockchain along with a validation check and timestamp. When data is to be exchanged between two users, a smart contract is used to check whether they are authorized users (and additional conditions if necessary). If this is the case, user A sends a transaction encrypted with user B's public key to the latter. User B verifies the transaction and sends back a transaction encrypted with user A's public key. This is verified by user A. Once this mutual verification has taken place, a shared secret can be exchanged, and symmetric encryption methods can be used.

This approach dispenses with a central authority (CA) and uses the blockchain as a distributed register for identities and the associated public keys. The blockchain stores public keys, digital signatures, and peer information in an auditable manner. The smart contract is guaranteed to work as deposited and is trustworthy, transparent and traceable.

It may further be provided that providing the machine-learning training data set is performed via a virtual private network (VPN) connection, which is preferably established between the data provider computer system and the data recipient computer system, preferably using the APIs.

A virtual private network (VPN) advantageously creates a private network across a public network and enables providing and receiving data across public networks securely. Encryption, although is not an inherent part of a VPN, it may be provided additionally, as described above.

The APIs of the data provider may at least comprise:
- a plugin architecture for data provision from different data sources, such as a plurality of databases, and/or
- a data preprocessing engine to perform preprocessing on at least part of the machine-learning training data set, wherein the preprocessing may be performed depending on usage information from the recipient, and wherein the preprocessing may comprise at least one of the following: first convolutions; second convolutions; Region-of-Interest (ROI) data cropping; Volume-of-Interest (VOI) data cropping; data shuffling; data augmentation, preferably to obfuscate data; data resolution adaption; meta-data adding, wherein the meta-data may comprise one or more user ratings with associated with the machine-learning training data set; annotation adding.

By providing the above-mentioned plugin architecture it may be ensured that a data provider can cluster its potentially diverse data sources and represent different data packages as one machine-learning data set to any possible data recipient. This is particularly advantageous for facilities and institutions with multiple sites or departments that work with different data management systems. In practice, for example, there are often historically grown data management systems that were changed to a newer data management system at a certain point in time, so that several data management systems exist simultaneously and may contain valuable data that would basically belong together.

Preprocessing of the data may be particularly advantageous from several points of view:
On the one hand, the data provider's interest in disclosing only as much as necessary but as little as possible of sensitive data can be considered. For example, for this purpose Region-of-Interest (ROI) data cropping and/or Volume-of-Interest (VOI) data cropping may be performed. Alternatively, or additionally, data augmentation, preferably to obfuscate data, may be performed for anonymizing data which is particularly relevant in order to meet data protection regulations in the medical field. The data augmentation may therefore be understood as an anonymization service in terms of data privacy.

On the other hand, the data recipient's interest in receiving targeted and relevant data for the intended purpose can be taken into account. The value of the provided machine-learning data set can thus be additionally increased. For example, the data may be preprocessed in a manner that it can be used directly to train a machine-learning model. Furthermore, additional meta-data can be added to increase the information content of the data. Meta-data can be, in particular, assessments of the validity of the data in the form of ratings. Optionally, annotations can be added to allow the data recipient to make own adjustments to the data set prior to use, if necessary or to get more information about the data such as when and where the data was recorded. As another example, data shuffling may be performed to combine different data to one machine-learning data set.

Further, again from the perspective of the data recipient, it is a particular benefit if the preprocessing is performed according to his intended usage of the machine-learning data set. Therefore, it may be provided that the data recipient defines usage information according to which specific preprocessing actions are chosen and/or purposed to be chosen by the data recipient. The usage information may comprise information about the machine-learning model to be trained and/or a list of data which is at a minimum needed for the intended usage and/or a definition of how the shape of the machine-learning training date data, for example the data format. Preprocessing can therefore be performed individually according to the purpose of use.

Further, as a general aspect, network traffic can be reduced if a provided machine-learning data set has been reduced to the essentials be the above-mentioned preprocessing actions.

It may be further provided that the APIs of the data provider and/or the APIs of the data recipient are configured to perform data versioning on the machine-learning training data set for auditing, approving and/or reproductivity requirements, wherein the data versioning may be performed using a blockchain versioning algorithm, preferably based on a suitable distributed ledger technology, e.g. a blockchain technology such as Ethereum which provides Smart Contracts.

Further, the data sharing platform, the data provider and the data recipient may form a Digital-Rights-Management-System, wherein the data sharing platform may be configured to manage respective licenses to enable data recipient to access the machine-learning training data set provided by the data provider, using the APIs, wherein enforcing at least one usage constraint defined by the data provider on the machine-learning training data set is preferably performed using a blockchain algorithm, preferably based on Ethereum Smart Contracts for recording immutable agreements.

Smart Contracts are an efficient way to define terms and conditions for the usage of the provided machine-learning training data in the framework of blockchain technology. Since Smart Contracts are well-applicable to digital goods, the machine-learning data sets to be provided may be subject to a Smart Contract. Advantageously, a set of pre-defined set of possible components of a Smart Contract may be provided by the data sharing platform, such that the data provider and/or data recipient may choose components to build a Smart Contract according to the apparent needs to agree on. One further advantage of using Smart Contracts is that regulatory paperwork is reduced. Additionally, by incorporating smart contracts, even monetary agreements may be covered and arbitrary additional agreements are possible, for example determining the authorships in a scientific project. For further remarks with respect to blockchain and Smart Contracts, it is referred to the below paragraph "GENERAL REMARKS".

The data recipient may comprise a Self-Encrypted Cache for receiving and accessing the machine-learning training data set.

Caches are widely known and used for speeding up data retrieval by reading from a faster source. For example, sectors from a hard disk drive of a computer can be cached in RAM which has a lower latency and higher speed, or files from the internet can be cached on a local computer. In general, this can be implemented using an associative data structure which stores each desired search key in association with its value, wherein the key could be a URL/URI or a file system path. A disadvantage of such standard caches is that they are transparent, so it is possible to examine the structure and the stored keys and values which is a security issue.

By implementing a self-encrypted cache for receiving and accessing the machine-learning training data set it is possible to enhance the security of the received data for the benefit of the data provider. A self-encrypted cache may be configured to use a further lookup key which is necessary to decrypt any cached data. Preferably, it may be provided that it is a requirement which must be fulfilled by the data recipient to have a self-encrypted cache in order to receive the desired machine-learning data sets from the data provider.

The method may comprise a step of enriching, by the data recipient, the received machine-learning data set by combination with own machine-learning data of the data recipient.

In practice, a data recipient often has its own data to train its machine-learning model but would like to have more data to improve the of training data. It is therefore particularly advantageous if the data recipient is given the opportunity to use his own data in combination with the received data. For this purpose, the data received from the data provider may be enriched with the data recipient's own data, for example by using one of its APIs which may be configured to perform a respective enrichment convolution.

It may be provided that the one or more selection criteria for a machine-learning training data set comprises at least one of the following:
- a type of data (e.g. text data, tabular data, image data, sequence data, audio data, video data, signal data) and/or a content of the data (e.g. medical imaging, radiology reports, health information, financial information, location information, or the like or any combination thereof),
- a minimum requirement of user ratings,
- a minimum requirement for availability of certain meta data,
- a minimum requirement for the age of the machine-learning training data set,
- a requirement for the origin of the machine-learning training data set,
- a requirement on the price to be paid for the use of the machine-learning training data set,
- a requirement for the terms of use of the machine-learning training data set (e.g. defined in a licence), particularly with respect to the duration and extent of use.

User ratings are an efficient and easy way of assessing the validity and value of machine-learning training data. It may be provided that the user ratings are stored at the data sharing platform being reliably assignable to a respective machine-learning data set of a data provider.

The requirement of meta data may be crucial for training some machine-learning algorithms. For example, if a machine-learning model is intended to be customized to a specific patient cohort in the medical field, it may be necessary to evaluate the suitability through the meta data. Meta data may comprise for example the type of medical diagnostic device used for generating data. Further, also the age and the origin of the machine-learning training data set may be relevant in that sense.

Further, the data recipient may have expense limitations which makes it beneficial to define a requirement on the price to be paid for the use of the data. Additionally, requirements for the terms of use of the machine-learning training data set may become relevant, for example if different machine-learning models are intended to be trained with the data. This may be the case if different hyperparameters of a machine-learning model are intended to be compared to each other after training in order to benchmark them for example with respect to different patient cohorts in the medical field.

Further, the method may comprise tracking / logging, by the data sharing platform, the usage of the machine-learning training data set through the APIs and preferably providing information regarding the usage to the respective data provider of the machine-learning training data set.

According to a fourth aspect of the present invention, a multi-factor authentication-hardware device (MFA-hardware device) is provided which may be configured to at least partially decrypt encrypted machine-learning training data set provided through any a method according to the first second and/or third aspect of the present invention. The MFA-hardware device preferably comprises at least one factor of a multi-factor authentication (MFA) including at least one usage constraint with respect to the time, time period, frequency or number of usages. The usage constraints are preferably associated with a specific electronic data set, in particular machine-learning training data set.

The MFA-hardware device may be provided by an operator of the data sharing platform. In particular, the MFA-hardware device may be a biometric authenticator capable to receive a biometric input of a user who acts as data recipient. Alternatively, the MFA-hardware device may have a specific key stored which is associated with the data recipient. Alternatively, the MFA-hardware device may be a smart device of the data recipient, configured to generate a randomly generated and frequently changing code to use for authentication. This may be realized through a third-party authenticator (TPA) app which is run on the smart device.

According to a fifth aspect of the present invention, a data processing apparatus, in particular a data sharing platform computer system, a data provider computer system and a data recipient computer system is provided which may comprise means for carrying out the respective methods according to the first, second and/or third aspect of the present invention.

According to a sixth aspect of the present invention, a system is provided that may comprise at least one data recipient computer system, at least one data provider computer system and a data sharing platform in accordance with the fifth aspect of the present invention.

According to a seventh aspect of the present invention, a computer program is provided that may comprise instructions which, when the program is executed by a computer, cause the computer to carry out a method according to the first, second and/or third aspect of the present invention.

All technical implementation details and advantages described with respect to the first, second and third aspects of the present invention, are self-evidently mutatis mutandis applicable for the fourth, fifth, sixth and seventh aspects of the present invention.

### BRIEF DESCRIPTION OF THE DRAWINGS

The disclosure may be better understood by reference to the following drawings:
- Fig. 1:: A block diagram illustrating a networked data processing system in accordance with embodiments of the invention.
- Fig. 2:: A block diagram illustrating a networked data processing system including a plurality of data providers and a plurality of data recipients in accordance with embodiments of the invention.
- Fig. 3:: A component diagram illustrating the different functionalities of the communicating parties in accordance with embodiments of the invention.

### DESCRIPTION OF PREFERRED EMBODIMENTS

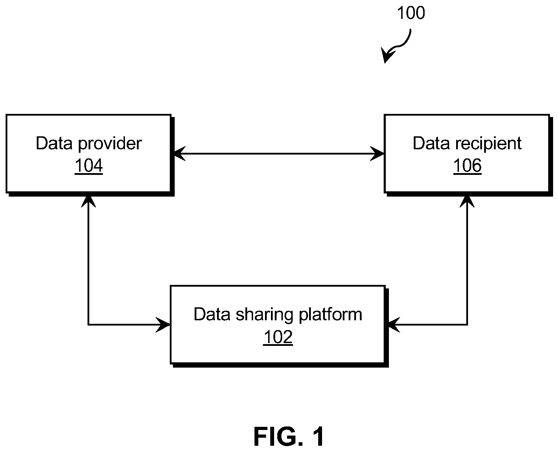

Figure 1 illustrates a networked data processing system 100 in accordance with an embodiment of the invention. As can be seen, the system 100 comprises a data sharing platform 102, a data provider 104 and a data recipient 106, which are implemented as respective data processing systems configured to communicate with each other via one or more network connections. The data provider 104 and the data recipient 106 may collectively be referred to as "partners", "collaborators", or the like. Using various techniques disclosed herein, a data recipient 106 may be enabled to transmit a data request to a data provider 104 and/or receive data from the data provider 104 over a secured, in particular dedicated, communication, for example secured point-to-point or peer-to-peer communication.

A data provider 104 may be operated by an institution, company, individual, or groups thereof, with the intent to share data externally under certain constraints, such as during a specific time period and/or for a specific purpose. A data recipient 106 may be operated by an institution, company, individual, or groups thereof, with the intent to use external data.

The data sharing platform 102 may guarantee the integrity of the communication, may manage and/or enforce access rights, and may manage and/or enforce predefined rules between the partners. Further, the data sharing platform 102 may include user interface(s), wherein a first user interface is provided to a data provider 104 to register data which is intended for sharing and/or to define usage constrains and/or to trigger immediate usage constrains, and wherein a second user interface is provided to a data recipient 106 for choosing desired data. For example, the data recipient may define a plurality of selection criteria for a machine-learning training data set via the second user interface. These selection criteria may be an input in a filter provided by the data sharing platform 102 and may include the selection of specific data provider(s) 104 out or a plurality of available data providers 104, a minimum requirement of user ratings, a minimum requirement for availability of certain meta data meta data, a minimum requirement for the age of the machine-learning training data set, a requirement for the origin of the machine-learning training data set, a requirement on the price to be paid for the use of the data, a requirement for the terms of use of the machine-learning training data set, particularly with respect to the duration and extent of use.

In certain embodiments, the data sharing platform 102 provides techniques which enable the data provider 104 to temporarily share data for use by the data recipient 106, while the control over the data remains with the data provider 104. In contrast to traditional federated learning approaches, the data recipient 106 has, in certain embodiments, local access to the data on its hardware through an on-demand data provision solution. In certain embodiments, Smart Contracts are used to document the agreements, terms and conditions between the data provider 104 and data recipient 106. Through Smart Contracts it is easily possible to define terms and conditions, in particular usage constrains and payment conditions with respect to a specific usage of the provided machine-learning training data. Advantageously, a set of pre-defined set of possible components of a Smart Contract may be provided by the data sharing platform 102, such that the data provider 104 and/or data recipient 106 may choose components to build a Smart Contract according to the apparent needs to agree on. One further advantage of using Smart Contracts is that regulatory paperwork is reduced. For further remarks with respect to blockchain and Smart Contracts, it is referred to the below paragraph "GENERAL REMARKS". In certain embodiments, the above-mentioned techniques enable a flexible "streaming" of the data.

The skilled reader will understand that the system 100 illustrated in Fig. 1 is extremely simplified for the sake of explanation, while embodiments of the invention may comprise any number of data providers 104 and/or data recipients 106. Accordingly, data from multiple data providers 104 may be share to a data recipient 106, data from a data provider 104 may be shared to multiple data recipients 106, and data from multiple data providers 104 may be shared to multiple data recipients 106, as the particular setup may require.

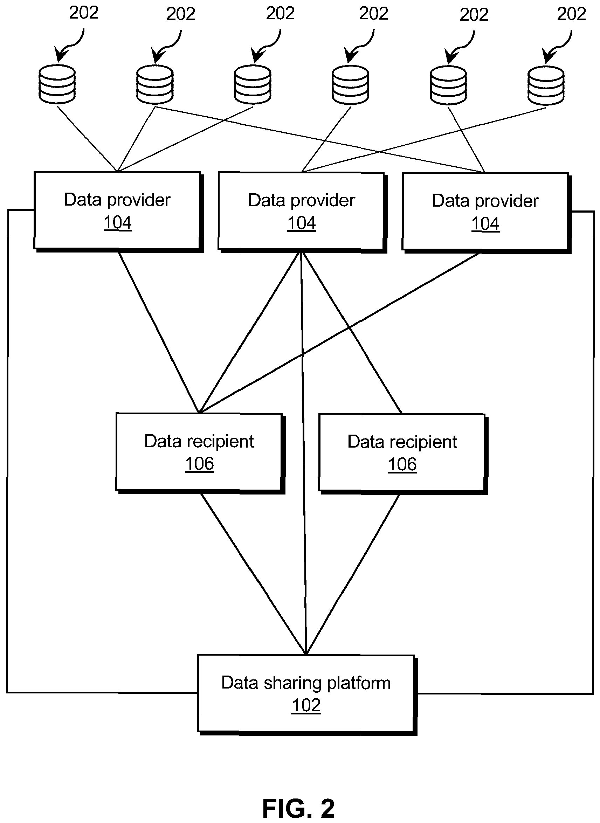

In the following disclosure with respect to figure 2, the data sharing will be explained primarily in the context of data for use in (biomedical) data science, such as data analysis, and/or artificial intelligence development, such as the training of a neural network or other machine-learning model. However, as at least some of the principles underlying embodiments of the invention are independent of the processed data, its content and use, the principles disclosed herein can be readily applied to other applications, such as for example quality insurance of data from medical devices by third parties independent of the vendor.

Figure 2 illustrates a plurality of data providers 104, each representing a diagnostic or operational healthcare entity, such as a hospital or physician's office. As further illustrated, the data providers 104 have a plurality of data storages 202. The data storages 202 may be, for example, various cloud-based patient data management systems or servers present at the respective data provider 104. These data storages 202 are used to store biomedical data of patients, for example, MRI images or X-ray images and information about the associated radiological diagnosis. For example, MRI images may be stored on a first data storage 202 and related diagnostic information may be stored on a second data storage 202. The data may therefore be divided into chunks and do not have to be at one single data source on the data provider side.

Further, a plurality of data recipients 106 are shown in Figure 2. These may include, for example, computer systems operated by software developers in a biomedical environment, medical device companies, pharmaceutical companies, research institutions, universities, hospitals, or medical practices that wish to create or improve a machine-learning model, for example, for diagnostic purposes.

The creation and/or further development of the machine-learning models of the data recipients 106 may require a suitable dataset in the form of training data. Particularly suitable training data may be data owned by the data providers 104 and stored on the data storage devices 202. For example, MRI image data with associated information about the particular diagnosis may be valuable machine-learning training data.

To obtain suitable machine-learning training data, data recipients 106 may access a data sharing platform 102 via provided APIs. The data sharing platform 102 provides the data recipients 106 with a user interface through which the data recipients 106 can select certain selection criteria, in particular by using a filter provided by the data sharing platform 102, to select which offered data from which data provider 104 they wish to use. Of course, beforehand, the data providers 104, as described above, also accesses the data sharing platform 102 via provided APIs by means of a user interface in order to offer their data there. However, the data itself remains on the data storage 202 and is merely mapped by means of the data sharing platform 102.

After the selection of offered data, the terms and conditions for the use are defined via the data sharing platform, whereby the respective data provider 104 defines in particular usage constraints that affect the use, in particular the time period, the frequency and the purpose of the use. The usage constraints can be secured, for example, via smart contracts, as described above.

Once the terms and conditions are defined, a secured connection, in particular a dedicated connection, for example a point-to-point or peer-to-peer connection, is established between the respective data recipient 106 and the respective data provider 104. As shown in Figure 2, data recipients 106 and data providers 104 can each establish several point-to-point or peer-to-peer connections. In other words, data provider 104 may simultaneously provide data to multiple data recipients 106, and data recipients 106 may receive data from multiple data providers 104 simultaneously.

Ideally, the machine-learning training data is pre-processed prior to being provided on the data provider 104 side. In doing so, to stay with the above example, the MRI images may be mapped with the diagnostic information, the personal patient data may be obscured, and ROI operations may be performed. By preprocessing, the data provider's interest in disclosing only as much as necessary but as little as possible of sensitive data can be considered, the data recipient's interest in receiving targeted and relevant data for the intended purpose can be taken into account, and the value of the provided machine-learning data set can thus be additionally increased. Optionally, the value of the provided machine-learning data set may be further increased by adding metadata which can comprise, in particular, assessments of the validity of the data in the form of ratings. Further, annotations may be added to allow the data recipient to make own adjustments to the data set prior to use, if necessary or to get more information about the data such as when and where the data was recorded. In certain embodiments, preprocessing may be performed individually according to the purpose of use. Further, it may be provided that the data recipient defines usage information according to which specific preprocessing actions are chosen and/or purposed to be chosen by the data recipient. The usage information may comprise information about the machine-learning model to be trained and/or a list of data which is at a minimum needed for the intended usage and/or a definition of how the shape of the machine-learning training date data, for example the data format.

Another important element is the encryption of the machine-learning training data. This can be managed by the data sharing platform. For example, Diffie-Hellmann key exchange (DH-key exchange) and/or Elliptic Curve Digital Signature Algorithm (ECDSA) and/or Rivest-Shamir-Adleman encryption (RSA) may be used. Additionally or alternatively it may be provided that the machine-learning training data set is secured by means of multi-factor authentication (MFA), wherein preferably at least one factor of the respective multi-factor authentication (MFA) is provided on a MFA-hardware device or may be provided to be a MFA-hardware device, the MFA-hardware device being configured to at least partially decrypt encrypted machine-learning training data, and/or is provided by using a blockchain generated key, the blockchain generated key being configured to at least partially decrypt encrypted machine-learning training data. The MFA-hardware device may be provided by an operator of the data sharing platform 102. In particular, the MFA-hardware device may be a biometric authenticator capable to receive a biometric input of a user who acts as data recipient. Alternatively, the MFA-hardware device may have a specific key stored which is associated with the data recipient. Alternatively, the MFA-hardware device may be a smart device of the data recipient, configured to generate a randomly generated and frequently changing code to use for authentication. This may be realized through a third-party authenticator (TPA) app which is run on the smart device.

In order to further enhance the security of the provided data, a data provider 104 may define the constrain that only data recipients 106 are allowed to use the available machine-learning training data if the data recipient 106 has a Self-Encrypted Cache for receiving and accessing the machine-learning training data. Thus, by implementing a self-encrypted cache for receiving and accessing the machine-learning training data, the data security is significantly increased.

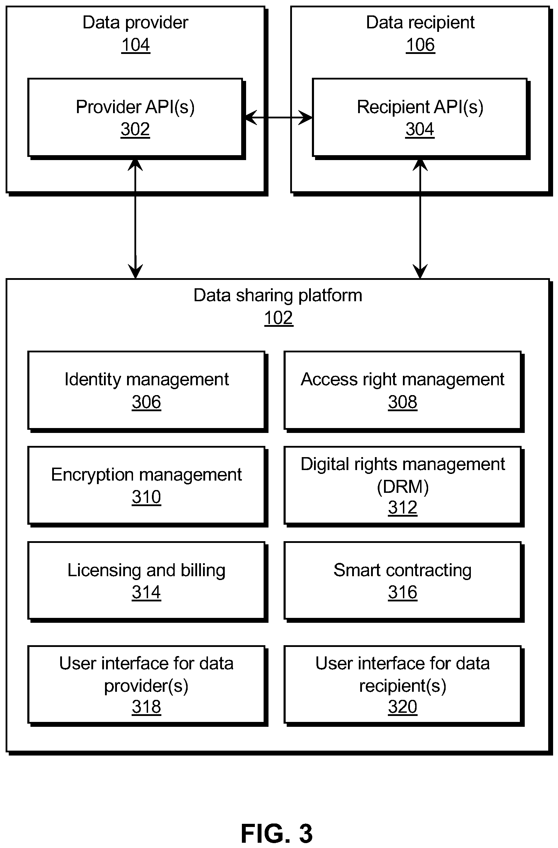

In the following, referring to figure 3, various functions of the system 100, the data processing platform 102, the data provider 104 and the data recipient 106 will be described with reference to corresponding blocks shown in the illustration. The blocks shall be understood as referring to functions, functionalities or services provided by the respective data processing system, i.e., to functional modules, and not necessarily to dedicated hardware modules or the like. Also, while the embodiments shown in the figures and explained in the accompanying description combine various functions, other embodiments may be configured to provide only a subset thereof.

Referring to the detailed view of the data sharing platform 102 in figure 3, the following services are provided: identity management 306, access rights management 308, encryption management 310, digital rights management 312, licensing and billing 314, smart contracting 316, user interface for data provider(s) 318, user interface for data recipient(s) 320. In accordance with one embodiment configured for providing these functions, each of them will be explained in the following.

The identity management 306 administers the identities, especially user accounts, of the parties communicating with the data sharing platform.

The access right management function 308 ensures the users of the data sharing platform 102, i.e., the data provider 104 and the data recipient 106, that the communication partner is really the legitimate partner. In particular, this can prevent a man-in-the-middle attack. The identity management can be done, for example, by an authentication routine where the communicating partners have to enter a password. Alternatively or additionally, multi-factor authentication can be provided, which can also be hardware-based, as described above.

The digital rights management function 312, in contrast to the access management function 308, distributes access permissions and manages them, especially with regard to possible usage constrains. Such usage constrains can be, as described above, for example time constrains or constrains with respect to the frequency of use.

The encryption management function 310 is guarantees the integrity of the data and security against unauthorized access. This is particularly important with regard to biomedical data containing sensitive patient data. The above-mentioned methods can be used for encryption.

With the licensing and billing function 314, the data sharing platform 102 may provide a built-in payment platform for secure check-out. Different types of billing may be provided, adapted, for example, to the specific data recipients 106, the number of uses, the duration of use, the purpose of use, and the resolution of the data. Additionally, smart contracting 316 may be provided to define terms and conditions, in particular conditional terms and conditions, for example, a higher number of permitted uses if a fee has been paid. For details with respect to Smart Contracts, it is referred to the above description and to the paragraph "FURTHER REMARKS" below.

The user interface for the data provider(s) 318 and the user interface for the data recipient(s) 320 may be interfaces which were adapted to the needs of the data provider(s) 104 or data recipient(s) 106 respectively. For example, a data provider 104 can offer its machine-learning data via the user interface for data provider(s) 318 and define usage constraints. A data recipient 106 can use the user interface for data recipient(s) 320 to obtain an overview of the machine-learning data offered and use a filter function to search for machine-learning data that meets his or her needs. The user interface for data recipient(s) 320 includes a search interface with functions as described above.

Optionally, the data sharing platform 102 may provide obfuscated representations of the machine-learning data of the data provider(s) 104. The term obfuscated representations can be understood as an Internet-of-Things representation of the actual machine-learning data being associated and uniquely allocatable to the actual machine-learning data without containing any elements of the actual machine-learning data. Therefore, the data sharing platform 102 may act as an Internet-of-Things platform wherein the "Things" are the machine-learning data. Further, it may be provided that the data provider 104 can choose whether Internet-of-Things representations of its machine-learning data should be created on the data sharing platform 102, wherein if this option is chosen, a further set of filtering functions is provided to the data recipients 106 to make the decision for the usage of a specific machine-learning data set easier. When creating an obfuscated representation for a machine-learning data, in simplified terms, a data object is created on the data sharing platform 102 that is uniquely associated with the machine-learning data only containing anonymous meta data. For example, a unique identifier (UID) may be used to ensure unambiguous assignability between an obfuscated representation and the actual machine learning data.

In a preferred embodiment of the invention, any data provided by the data provider 104 to the data recipient 106 can be accessed by the data recipient 106 only through the API 304, which is provided by the data sharing platform 102. This way, the data sharing platform 102 can enforce any usage constraints on the shared data. For example, when the usage authorization of the data recipient 106 expires, the API may simply block the usage of the data. In a practical example, the data sharing platform or the operator of the data sharing platform, respectively, may provide a certain program code, e.g. in the form of a library, which the data recipient may include in its development environment (e.g. by an import statement a Python library in one specific implementation). The library may then handle the encryption, logging, tracking, user authentication and/or other handling of the data. Accordingly, this aspect of the invention is analogous to "streaming data" which is available at the recipient only through a special software, and therefore securely encapsulated in the control framework of the platform and thus the provider.

### EXAMPLE USE CASES

In the following, an exemplary use-case scenario in which an embodiment of the invention is used will be described:
A machine-learning researcher intends to train her machine-learning models with medical data. She signs up at the website "datasharing.ai", which is an online platform that can connect her with clinics that offer real-world medical data.

Based on a filter using anatomical, modality (CT, MRI) and meta data of the scans (vendor, sequence, MR parameters) and patients (gender, age, disease), she is able to create a data cohort ("playlist"). In addition, she can choose if the data should stem from one or several data suppliers. As data review and valid ground truth data is important to her for training her models, she also relies on the ratings that were provided by other users for the data she selected. Especially because she is not very confident with respect to the anatomical and pathological annotations, she narrows down her search to only 5-star ratings that were at least double-checked by two specialists.

The data cohort that she defined in this manner covers institutions she already subscribed to, but also new institutions. The platform guides her through the process of subscribing to these new institutions. The data of her own research organization is already in the system and hence an online contract can be arranged easily by opt-in after reviewing the terms and conditions of the data providers.

Using an API provided by the platform, she embeds the service into her training framework. She specifies certain parameters, such as 2D/3D streaming and the resolution the data needs to have.

Next to a validation cohort, she also chooses her online test cohort (in addition, she will be testing with confidential on-premise testing data). Once she starts the training, the data is preprocessed by the streaming service and in each epoch, the entire set of data is presented to her model. The data is cached locally, so she does not have issues with idling GPUs during copying of the data. During and after training, she is able to review the data alongside with ground truth and the predictions her model made. Caching is, however, optional and may be disabled in certain embodiments, in particular when network bandwidth is not an issue.

Depending on the plan she subscribed to, the data expires after a pre-defined period (e.g., days or weeks). The plan also dictates whether she is able to stream the data in parallel for training several models with different hyperparameters or only sequentially with a single model once at a time.

After testing her model, she chooses an option "external expert review" to upload her generated segmentations to the platform and have the results reviewed by experts. Here, she can choose the reviewers and different payment options, e.g., co-authorships or hourly rates depending on experience and rating of the experts. After getting a good evaluation by the experts, she is confident to publish her results.

Further short exemplary use cases are listed below:
1. University hospital A provides radiological image data to industrial company B for training an AI solution for image-based characterization of tumor diseases as part of a 3-year collaboration. Within this time frame, B's employees can access the data to train the models. After the collaboration expires, this access expires.
2. Doctoral student C works for 3 years at institution D, within this time frame health data is made available to him for statistical analysis and training of predictive models, after completion of the work access to this data expires.
3. A company E provides a solution for the university hospitals F, G, H in which the companies I,J and the research institute K are provided with various data l,m,n for a collaboration designed for 1 year. I and J can access the data l,m and K can access l,n. The access expires at the end of the collaboration period. This access expires at the end of the collaboration.
4. In the context of a multicenter study, health data that are difficult to anonymize (rare diseases, free texts, movement data, images of faces) of a large patient cohort of the clinics O, P, Q, R are evaluated at the clinic O. In the context of data economy, access can be limited in time. Although access expires at the end of the study, permanent, decentralized backups of the data are stored at the clinics in order to be able to generate a recombination of the dataset after release by the partners in the event of a later review.
5. In MDR application development and certification the method may be used. Via a central directory, which connects many senders and receivers of data, data volumes in orders of magnitude, which are currently not possible, can be made available to institutions or companies. This will be particularly necessary for certifications (Medical Device Regulation / FDA) of applications in order to be able to offer manufacturers, for example, realistic data from various manufacturers and with different content as part of the certification and subsequent market monitoring.

### GENERAL REMARKS

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### Machine Learning

Certain embodiments of the invention may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g., sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g., a classification algorithm, a regression algorithm or a similarity learning algorithm). Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters. Reinforcement learning is a third group of machine-learning algorithms that may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules.

Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g., based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

### Blockchain and Smart Contracts

From a technical point of view, a blockchain is a peer-to-peer network that strings together blocks of a fixed length. The integrity and confidentiality of the individual blocks is ensured by means of cryptography. The main achievement of blockchain technology is that it can be used to solve the double-spending problem in decentralized systems. The smallest unit of a blockchain is a block. In addition to an identifier and other metadata, a block consists mainly of transaction data. Furthermore, a block consists of a signature, a nonce and, most importantly, the signature of the predecessor block.

The resulting construct of blocks strung together then forms the blockchain. If an attacker wants to manipulate a block in the blockchain, for example to manipulate a transaction, the resulting signature for the manipulated block would of course also change, since the transaction data is included in the signature. However, since this signature is also stored in the successor block, the attacker would also have to change the nonce for this block so that the signature again corresponds to the default. The attacker would then have to repeat this process for each successor block until all signatures are consistent again. This is only possible if the attacker controls more than 50 percent of the computing power in the network, because otherwise more new blocks are created than the attacker can manipulate at the same time. The concept described is also called proof-of-work, and the Ethereum network also currently uses this method. However, proof-of-work is criticized because the energy requirement for this procedure is increasing very rapidly. For this reason, other consensus methods are currently being worked on. One of the better known is the so-called proof-of-stack method. Here, transactions are not confirmed by miners, but they are decided by the majority holders in the network. Ethereum would like to switch to the proof-of-stack method in a later update.

Compared to Bitcoin, the first implementation of the blockchain, Ethereum should be Turing-complete and able to record states via a state machine. Ethereum works like Bitcoin at its core. Transactions are sent to the blockchain and then processed by miners. However, unlike the Bitcoin network, these transactions have memory, so states can be read and modified across multiple transactions. Depending on the states, the same transactions can then behave differently. In addition, Turing completeness makes it possible to use programming constructs such as loops. Ethereum is thus a programmable blockchain. Instead of providing users with a set of pre-built functions, the idea is to allow users to create any function they need on their own. For example, on the Bitcoin network, there is the simple function of executing a transaction. While this also exists in the Ethereum network, the user can still extend this function as needed. For example, a transaction of money can be conditional. The transaction is only released if the recipient has previously handed over a digital good. Otherwise, an automatic rollback takes place after a certain time and the sender gets his money back. This type of transaction is also called a smart contract. At the core of these blockchain programs is the Ethereum Virtual Machine (EVM), which can execute arbitrary code. The EVM acts in a similar way to the Java Virtual Machine (JVM) in the Java context. It forms a secure interface to the resources of a node in the Ethereum network. Developers can write code in JavaScript, Python, or other programming languages and compile it into machine code for the EVM using a compiler. The EVM then executes the code on the nodes. Although it is in principle possible to create code for the EVM in many popular programming languages with an appropriate compiler, Solidity has become the preferred choice for programming programs on the Ethereum blockchain. However, the EVM has another benefit. After code arrives on the network via transaction, it is first executed by the node that includes it in its block. Then, once that block is in the blockchain, EVM also ensures that the same code is executed on every other node, so the states on each node are always consistent.

When a new node is created on a computer, it is first in an initial state. The new node then connects to existing nodes on the network and begins downloading the blockchain. This is done block by block, in the exact sequence that the blockchain was created. All program calls that are in a block are called on the new node in exactly the same way as they have already been executed on all other already existing nodes. With each call, the state of the new node also changes. This happens until the new node is on exactly the same state as all other nodes in the network. This ensures that once a program has been loaded into the blockchain, it will definitely be executed, as it will be executed unstoppably on every node. This massive parallelism in no way makes computations on the Ethereum network more efficient. On the contrary, transactions on the Ethereum network are actually many times slower and many times more costly than in traditional computer systems. But by having every node in the network running EVM, maximum consensus is created. Because of this decentralized consensus, the Ethereum network provides maximum fraud protection. It also ensures that there is no downtime (unless all nodes fail) and that data, once stored in the blockchain, is resistant to change and free from censorship. For these reasons, Ethereum is also called the world computer, as the EVM ensures that the entire Ethereum network can be seen as one computer.

As with any other development environment, it is up to the programmer to decide what to make of the tool that is provided to them. However, some applications can particularly benefit from Ethereum. These include, for example, classic use cases from IT security. In IT security, a maximum of secrecy, integrity and availability is usually required. For the fulfillment of these requirements, the Ethereum network is particularly predestined by its properties. Smart contracts can be best applied wherever it is possible to electronically represent an object of value.

## Claims

1. A computer-implemented method for the controlled provision of electronic data for machine-learning between research and development entities, wherein the method comprises the following steps performed by a data sharing platform (102) computer system:
receiving, from a data recipient (106) computer system, user input comprising one or more selection criteria for an electronic data set, the one or more selection criteria including a selection of at least one data provider (104) computer system;
causing, using application programming interfaces (APIs) (302, 304) provided to the data recipient (106) and the at least one data provider (104), the selected at least one data provider (104) to provide the electronic data set to the data recipient (106) over a secured connection between the data recipient and the at least one data provider; and
enforcing, using the APIs (302, 304), at least one usage constraint defined by the at least one data provider (104) on the electronic data set.

2. A computer-implemented method for the controlled provision of electronic data for machine-learning between research and development entities, wherein the method comprises the following steps performed by a data provider (104) computer system:
providing, using application programming interfaces (APIs) (302, 304) of the data provider (104) computer system, an electronic data set to a data recipient (106) computer system over a secured connection with the data recipient, wherein the providing is performed after a data sharing platform (102) computer system has received user input comprising one or more selection criteria for electronic data set from the data recipient (102);
defining, by the data provider (104), at least one usage constraint on the electronic data set, wherein the at least one usage constraint may be enforced, preferably by the data sharing platform (102), using APIs (302, 304) of the data provider (104) and of the data recipient (106).

3. A computer-implemented method for the controlled provision of electronic data for machine-learning between research and development entities, wherein the method comprises the following steps performed by a data recipient (106) computer system:
determining, by the data recipient (106) computer system on the basis of a user input, one or more selection criteria for an electronic data set, the one or more selection criteria including a selection of at least one data provider (104) computer system, wherein the one or more selection criteria are provided to a data sharing platform (102);
receiving, using application programming interfaces (APIs) (302, 304) of the data recipient (106) computer system, the electronic data set from a data provider (104) computer system over a secured connection with the at least one data provider, wherein the data sharing platform (102) may enforce, using APIs (302, 304) of the data recipient (104) and of the data provider (106), at least one usage constraint defined by the at least one data provider (104) on the electronic data set.

4. The method of one of the preceding claims, wherein the secured connection between the data recipient (106) and the at least one data provider (104) is a dedicated connection between the data recipient (106) and the at least one data provider (104);
wherein, preferably, the dedicated connection does not involve the data sharing platform (102), and wherein, optionally, the dedicated connection is a point-to-point connection or a peer-to-peer connection.

5. The method of one of the preceding claims, wherein providing the electronic data set is performed in an encrypted manner, wherein encryption management is performed by the data sharing platform (102) communicating with the APIs (302, 304), preferably using Diffie-Hellmann key exchange (DH) and/or Elliptic Curve Digital Signature Algorithm (ECDSA) and/or Rivest-Shamir-Adleman encryption (RSA).

6. The method of one of the preceding claims, wherein the electronic data set is secured by means of multi-factor authentication (MFA), which may be a two-factor authentication (2FA), wherein the multi-factor authentication (MFA) preferably comprises asymmetric encryption, wherein preferably at least one factor of the respective multi-factor authentication (MFA) or two-factor authentication (2FA)
- is provided on a MFA-hardware device or may be provided to be a MFA-hardware device, the MFA-hardware device being configured to at least partially decrypt encrypted electronic data, and/or
- is provided by using a blockchain generated key, the blockchain generated key being configured to at least partially decrypt encrypted electronic data.

7. The method of one of the preceding claims, wherein providing the electronic data set is performed via a virtual private network (VPN) connection, which is preferably established between the data provider (104) computer system and the data recipient (106) computer system, preferably using the respective APIs (302, 304).

8. The method of one of the preceding claims, wherein the method comprises enriching, by the data recipient (106), of the received electronic data set by combination with own electronic data of the data recipient (106), and/or wherein the APIs (302, 304) of the data provider (104) at least comprise
- a plugin architecture for data provision from different data sources, such as a plurality of databases, and/or
- a data preprocessing engine to perform preprocessing on at least part of the electronic data set, wherein the preprocessing may be performed depending on usage information from the recipient, and wherein the preprocessing may comprise at least one of the following: first convolutions; second convolutions; Region-of-Interest (ROI) data cropping; Volume-of-Interest (VOI) data cropping; data shuffling; data augmentation, preferably to obfuscate data; data resolution adaption; metadata adding, wherein the metadata may comprise one or more user ratings with associated with the electronic data set; annotation adding.

9. The method of one of the preceding claims, wherein the APIs (302, 304) of the data provider (104) and/or the APIs (302, 304) of the data recipient (106) are configured to perform data versioning on the electronic data set for auditing, approving and/or reproductivity requirements, wherein the data versioning may be performed using a blockchain versioning algorithm, preferably based on Ethereum Smart Contracts.

10. The method of one of the preceding claims, wherein the data sharing platform (102), the data provider (104) and the data recipient (106) form a Digital-Rights-Management-System, wherein the data sharing platform (102) may be configured to manage respective licenses to enable data recipient (106) to access the electronic data set provided by the data provider (104), using the APIs (302, 304), wherein enforcing at least one usage constraint defined by the data provider (104) on the electronic data set is preferably performed using a blockchain algorithm, preferably based on Ethereum Smart Contracts for recording immutable agreements.

11. The method of one of the preceding claims, wherein the data recipient (106) comprises a Self-Encrypted Cache for receiving and accessing the electronic data set.

12. The method of one of the preceding claims, wherein the one or more selection criteria for an electronic data set comprises at least one of the following:
- a type and/or content of the electronic data set,
- a minimum requirement of user ratings,
- a minimum requirement for availability of certain meta data,
- a minimum requirement for the age of the electronic data set,
- a requirement for the origin of the electronic data set,
- a requirement on the price to be paid for the use of the electronic data set,
- a requirement for the terms of use of the electronic data set, particularly with respect to the duration and extent of use.

13. A multi-factor authentication-hardware device (MFA-hardware device) configured to at least partially decrypt encrypted electronic data set provided through a method according to any one of claims 1-12, wherein the MFA-hardware device preferably comprises at least one factor of a multi-factor authentication (MFA) including at least one usage constraint with respect to the time, time period, frequency or number of usages, the usage constraints being preferably associated with a specific electronic data set.

14. A data processing apparatus or system comprising means for carrying out the method of any one of claims 1-12.

15. A computer program comprising instructions which, when the program is executed by a computer, cause the computer to carry out the method of any one of claims 1-12.
